# EUROPÄISCHE PATENTANMELDUNG

(11) **EP 2 763 039 A1**
(43) Veröffentlichungstag der Anmeldung: **06.08.2014**
(21) Anmeldenummer: 13153288.9
(22) Anmeldetag: 30.01.2013
(51) Int. Cl.: G06F 9/52, G06F 9/455, G06F 9/50

(54) **Verfahren und Virtualisierungssteuerung zur Verwaltung einer Ressource eines Computers mit zumindest zwei virtuellen Maschinen**

(71) Anmelder: Siemens Aktiengesellschaft, 80333 München (DE)
(72) Erfinder: Niesser, Otto, 90584 Allersberg (DE); Ünver, Halil Caglar, 90402 Nürnberg (DE)

(57) **Zusammenfassung**

Die Erfindung betrifft ein Verfahren und eine Virtualisierungssteuerung (VS) zur Nutzung einer Ressource (R) eines Computers durch zumindest zwei virtuelle Maschinen (G1, G2), wobei eine Virtualisierungssteuerung (VS) zur Virtualisierung der Ressource (R) eingerichtet ist. Dabei ist für einen alleinigen Zugriff auf die Ressource (R) durch eine erste der virtuellen Maschinen (G1) ein direkter Zugriff (DZ) der ersten virtuellen Maschine (G1) auf die Ressource (R) vorgesehen ist, wobei der zweiten virtuellen Maschine (G2) für Zugriffe auf die Ressource (R) ein virtuelles Gerät (VG2) zugeordnet ist, wobei im Falle einer Zugriffsanforderung der zweiten virtuellen Maschine (G2) auf die Ressource (R) in einem ersten Schritt der direkte Zugriff (DZ) der ersten virtuellen Maschine (G1) auf die Ressource (R) beendet wird, in einem zweiten Schritt die Kontrolle der Ressource (R) von der Virtualisierungssteuerung (VS) vollständig übernommen wird, in einem dritten Schritt der ersten virtuellen Maschine (G1) für weitere Zugriffe auf die Ressource (R) ein erstes virtuelles Gerät (VG1) zugeordnet wird, und in einem vierten Schritt der Zugriff der zweiten virtuellen Maschine (G2) auf die Ressource (R) mittels des zweiten virtuellen Gerätes (VG2) durchgeführt wird. Dadurch ist ein wechselweiser Zugriff auf Ressourcen durch mehrere virtuelle Maschinen bzw. der darauf ablaufenden Betriebssysteme und Prozesse möglich, wobei je nach Bedarf entweder eine einzelne Maschine hochperformant oder mehrere Maschinen konkurrierend oder quasi-gleichzeitig auf die Ressourcen jeweils zugreifen können.

## Beschreibung

Die Erfindung betrifft ein Verfahren zur Verwaltung einer Ressource eines Computers mit zumindest zwei virtuellen Maschinen gemäß dem Oberbegriff des Patentanspruchs 1 und eine Virtualisierungssteuerung zur Ausführung des Verfahrens gemäß dem Oberbegriff des Patentanspruchs 9.

In vielen Anwendungsfällen werden virtuelle Laufzeitumgebungen auf Computern realisiert, wobei auf einer Hardware-Plattform mehrere virtuelle Laufzeitumgebungen (allgemein auch als "virtuelle Maschinen" bezeichnet) parallel betrieben werden können. Durch eine solche Virtualisierung können mehrere, auch unterschiedliche Betriebssysteme parallel zueinander betrieben werden.

Dabei bietet die Virtualisierung den Vorteil, dass die einzelnen virtuellen Laufzeitumgebungen weitgehend voneinander entkoppelt sind. Das bedeutet, dass Datenaustausch zwischen den Laufzeitumgebungen, außer auf dafür vorgesehenen Schnittstellen, nicht erfolgen kann und somit beispielsweise die Abarbeitung in einer der Laufzeitumgebungen idealer Weise keine negativen Auswirkungen auf die Abarbeitung von Programmen in anderen Laufzeitumgebungen hat.

Eine solche Architektur macht man sich auch in industriellen, Smart-Grid oder sonstigen Automatisierungsanordnungen zunutze, wobei eine Steuerungsaufgabe durch ein oder mehrere Standard- bzw. Echtzeitbetriebssysteme und darauf ablaufende Automatisierungsprogramme realisiert wird. So kann zum Beispiel auf einem Rechner ein echtzeitfähiges Betriebsystem (RTOS - Real Time Operation System) laufen und daneben in weiteren virtuellen Laufzeitumgebungen andere Betriebssysteme, insbesondere sog. "Standard-" oder "Allzwecksysteme" wie Microsoft Windows 7 oder Linux, die hier auch als GPOS (General Purpose Operation System) bezeichnet werden. In einem anderen Beispiel können mehrere GPOS Betriebsysteme auf einem Rechner laufen, auf denen verschiedene Server-Applikationen ausgeführt werden.

Das Ziel einer solchen Aufteilung der vorhandenen Ressourcen einer Plattform ist die erhöhte Ausnutzung selbiger Ressourcen. Die Applikationen verwenden die Ressourcen der Plattform meist nicht mit voller Kapazität. Ein anderer Punkt liegt darin, dass verschiedene Betriebsysteme verschiedene Funktionalitäten bieten, und entsprechende Applikationen meistens wenig portabel für ein bestimmtes Betriebsystem entwickelt worden sind. Statt nun jedem Betriebsystem und den darauf laufende Applikationen ein eigenen Hardware-Plattform (Rechner) zuzuweisen, kann ein Rechner durch Virtualisierungstechnologien mehrere Betriebsysteme und deren Applikationen zum Ablauf bringen.

Die virtuellen Laufzeitumgebungen werden in der Regel durch eine Verwaltungseinrichtung erzeugt und überwacht, wobei die Verwaltungseinrichtung den einzelnen virtuellen Laufzeitumgebungen die Ressourcen der Hardware-Plattform zuordnet bzw. für einen Teil der Ressourcen stellvertretend für die virtuellen Laufzeitumgebungen den Zugriff auf die Ressourcen vornimmt. Eine solche Verwaltungseinrichtung wird oft als "Hypervisor" oder "Virtual Machine Monitor" (VMM) bezeichnet; im Folgenden soll auch die allgemeine Bezeichnung "Virtualisierungssteuerung" verwendet werden. Dabei benötigt der Hypervisor im Allgemeinen Hardwareunterstützung in Form von bekannten Virtualisierungstechnologien wie VMX (Intel Virtualization Technology - VT-x) oder SVM (AMD Secure Virtual Machine - SVM), die die gängigen Prozessoren inzwischen meistens bieten.

Im Folgenden soll exemplarisch eine Virtualisierungssteuerung, also ein Hypervisor (VMM) (als Standalone-Programm direkt auf einer Hardware, als Teil einer Firmware, eines Betriebssystems oder als Applikation auf einem Betriebssystem ablaufend), mit mehreren virtuellen Maschinen ("VMs") VM1, ..., VMx und darauf laufenden Gastbetriebssystemen G1 .. Gn, oder kurz "Gästen" betrachtet werden, wobei der Hypervisor auch als "Host" für seine Gastbetriebssysteme bezeichnet wird. Ein Kennzeichen dieser Aufteilung ist, daß der Hypervisor im sogenannten Root-Mode läuft, während die VMs, die seine Gäste beherbergen, stets im Non-Root-Mode laufen. Der Hypervisor sei so realisiert, dass den Gastsystemen Gx echte (reale, also physisch vorhandene) Ressourcen R der unterliegenden Hardware zugeteilt werden können.

Da der Hypervisor in der Lage ist, I/O- und Speicherzugriffe seiner Gäste zu überwachen, für dies Zugriffen beliebige Daten zu liefern und asynchrone Ereignisse wie Interrupts den Gästen zu übermitteln (z.B. "injizieren", engl.: Interrupt Injection), ist es möglich, den Gästen gegenüber die Funktionalität beliebiger Hardware zu emulieren, die entweder auf dem System nicht vorhanden ist, oder die zwar vorhanden, aber den Gästen nicht dediziert zugeteilt werden soll. Wird eine Hardware dergestalt emuliert, so sprechen wir in der Folge von einer virtuellen Hardware. Um eine virtuelle Hardware zu realisieren, können dem Hypervisor eine oder mehrere reale Geräte entsprechend zur Verfügung stehen, z.B. kann realer Festplattenspeicher, RAM-Speicher oder auch ein Netzwerklaufwerk verwendet werden, um eine virtuelle Festplatte zu emulieren. Die Realisierung virtueller Hardware kann im Hypervisor selbst oder in einem speziell hierfür instrumentierten weiteren Gastbetriebssystem und/oder in dessen Applikation erfolgen.

Durch die direkte Zuteilung "echter" (realer) anstatt virtueller Hardware kann die Interaktion des Hypervisors mit seinen Gästen minimiert werden. Solange eine Ressource als funktional unabhängige Einheit einer realen Hardware (z.B. Device am PCI-Bus oder Function eines Device am PCI-BUS) nur einem Gast direkt zugeteilt ist, kann dieser ohne VMM-Kontrolle darauf zugreifen, d.h. die Adressen der Ressource werden für den entsprechenden Gast nicht überwacht und der Zugriff darauf führt nicht zu Unterbrechungen in der Abarbeitung des Gasts. Für alle anderen Gäste müssen diese Adressen überwacht werden, um einen Zugriff auf R zu unterbinden, um eine Inkonsistenz des Hardwarezustandes und andere Probleme, die aus einem unkontrollierten wechselweisen Zugriffs entstehen können, zu vermeiden. Soll eine Ressource R zwischen mehreren Gästen aufgeteilt werden, so kann immer noch auf die Bereitstellung einer virtuellen Hardware verzichtet werden, solange der Hypervisor die Zugriffe auf R geeignet koordiniert, um Überschneidungen im Zugriff verschiedener Gäste zu vermeiden. Dies gilt insbesondere für Ressourcen, bei denen ein Einzelauftrag verschiedene Zustände durchläuft, welche zwingend in der vorgegebenen Reihenfolge abzuarbeiten sind.

Lösungswege für oben dargestellte Aufgaben innerhalb einer Virtualisierungssteuerung sind durch den Stand der Technik bekannt. Im Wesentlichen wird man hierzu Zugriffe der Gäste auf die Ressource überwachen und/oder unterbinden, echte Hardwarezugriffe geeignet koordinieren und den Gästen ihre Zugriffe nach Vorbild echter Hardwarezugriffe emulieren.

Einen direkten Zugriff eines Gasts auf eine Ressource bezeichnen wir in Folge auch als 'nicht virtualisiert', einen mit einer VMM-Interaktion verbundenen Zugriff als 'virtualisiert'. Für letzteres müssen die zur Ressource gehörenden I/O und/oder Memory-Mapped Bereiche durch den Hypervisor überwacht, und Zugriffe darauf unterbrochen werden. Hat ein Gastsystem Kenntnis von der Hypervisor-Umgebung und greift somit per eigens initiierter VMM-Interaktion auf R zu, so bezeichnen wir dieses als "paravirtualisiert". Diese Bezeichnung behalten wir auch dann bei, wenn die Interaktion mit einem speziell für die Behandlung von R bereitgestellten weiteren Gastsystems (Service-VM) erfolgt, die wir logisch als Teil des VMM betrachten, obwohl sie selbst nicht im Root-Mode, sondern unter Kontrolle des VMM läuft und mit den anderen Gästen durch Methoden nach Stand der Technik kommuniziert. Sind sämtliche Zugriffe auf eine Ressource nur durch VMM-Interaktion möglich, so ist dies 'vollvirtualisiert' im Gegensatz zu 'teilvirtualisiertem' Zugriff, der eine Mischung aus nicht virtualisierten und virtualisierten Zugriffen darstellt. Die oben erwähnte eigens durch den Gast initiierte Interaktion mit dem Hypervisor bezeichnet man auch als Hypercall oder Hypervisor Call.

Es besteht jedoch das Problem, dass der Zugriff auf eine virtualisierte Ressource durch die damit verbundenen Interaktionen mit dem VMM zu erheblichen Performancenachteilen gegenüber dem direkten Zugriff auf die Hardware der Ressource führt. Zwar existieren Verfahren, die bereits eine Verringerung dieser Nachteile ermöglichen, jedoch sind die Resultate nicht immer ausreichend.

Es ist daher eine Aufgabe des erfindungsgemäßen Verfahrens und der erfindungsgemäßen Virtualisierungssteuerung, die dargestellten Performancenachteile bei der Verteilung einer Hardwareressource zwischen mehreren Gästen weiter zu verringern.

Die Aufgabe wird durch ein Verfahren gemäß Patentanspruch 1 und eine Virtualisierungssteuerung gemäß Patentanspruch 9 gelöst.

Dabei wird ein Verfahren zur Nutzung einer Ressource eines Computers durch zumindest zwei virtuelle Maschinen vorgeschlagen, wobei ein wechselweiser Zugriff auf die Ressource durch die auf den virtuellen Maschinen jeweils installierten Betriebssysteme vorgesehen ist, wobei eine Virtualisierungssteuerung zur Virtualisierung der Ressource eingerichtet ist, und wobei in der Virtualisierungssteuerung die Ressource für jede der virtuellen Maschinen als ein erstes bzw. als ein zweites virtuelles Gerät bereitgestellt wird. Dabei ist für einen alleinigen Zugriff auf die Ressource durch eine erste der virtuellen Maschinen ein direkter Zugriff eines ersten Betriebssystems der ersten virtuellen Maschine auf die Ressource vorgesehen, wobei der zweiten virtuellen Maschine für zugriffe auf die Ressource das zweite virtuelle Gerät zugeordnet ist, und wobei im Falle einer Zugriffsanforderung der zweiten virtuellen Maschine auf die Ressource in einem ersten Schritt der direkte Zugriff der ersten virtuellen Maschine auf die Ressource beendet wird, und in einem zweiten Schritt die Kontrolle der Ressource von der Virtualisierungssteuerung vollständig übernommen wird. Mit Schaltung eines transparenten Gerätes hat die Virtualisierungssteuerung zwar prinzipiell bereits die volle Kontrolle über die Ressource, nutzt diese aber nicht, sondern überwacht nur einen ggf. noch laufenden Benutzungszyklus. Erst bei Identifikation eines geeigneten Zeitpunktes wird die Virtualisierungssteuerung die Kontrolle auch zur Vollvirtualisierung nutzen. In einem dritten Schritt wird der ersten virtuellen Maschine für weitere Zugriffe auf die Ressource das erste virtuelle Gerät zugeordnet, und in einem vierten Schritt wird der Zugriff der zweiten virtuellen Maschine auf die Ressource mittels des zweiten virtuellen Gerätes durchgeführt. Dadurch ist ein wechselweiser Zugriff auf Ressourcen durch mehrere virtuelle Maschinen bzw. der darauf ablaufenden Betriebssysteme und Prozesse möglich, wobei je nach Bedarf entweder eine einzelne Maschine hochperformant oder mehrere Maschinen konkurrierend oder quasi-gleichzeitig auf die Ressourcen jeweils zugreifen können.

Die Lösung der Aufgabe sieht außerdem eine Virtualisierungssteuerung zur Verwaltung einer Ressource eines Computers mit zumindest zwei virtuellen Maschinen und zur Verwaltung der Zugriffe der zumindest zwei virtuellen Maschinen auf die Ressource vor, wobei die Virtualisierungssteuerung zur Bereitstellung von einem ersten virtuellen Gerät für Zugriffe der ersten virtuellen Maschine auf die Ressource und zur Bereitstellung eines zweiten virtuellen Gerätes für Zugriffe der zweiten virtuellen Maschine auf die Ressource eingerichtet ist. Dabei ist die Virtualisierungssteuerung dazu eingerichtet, dass für einen alleinigen Zugriff auf die Ressource durch eine erste der virtuellen Maschinen ein direkter Zugriff des Betriebssystems der ersten virtuellen Maschine auf die Ressource konfiguriert wird, wobei der zweiten virtuellen Maschine mit dem zweiten Betriebssystem für Zugriffe auf die Ressource das zweite virtuelle Gerät zugeordnet ist, und wobei im Falle einer Zugriffsanforderung der zweiten virtuellen Maschine mit dem zweiten Betriebssystem auf die Ressource in einem ersten Schritt der direkte Zugriff der ersten virtuellen Maschine auf die Ressource beendet wird, in einem zweiten Schritt die Kontrolle der Ressource von der Virtualisierungssteuerung vollständig übernommen wird, in einem dritten Schritt der ersten virtuellen Maschine für weitere Zugriffe auf die Ressource das erste virtuelle Gerät zugeordnet wird, und in einem vierten Schritt der Zugriff der zweiten virtuellen Maschine auf die Ressource mittels des zweiten virtuellen Gerätes durchgeführt wird. Mit einer solchen Virtualisierungssteuerung (Virtual Machine Monitor - VMM oder Hypervisor) lassen sich die im Zuge des Verfahrens erläuterten Vorteile realisieren.

Vorteilhafte Ausgestaltungen sind in den abhängigen Patentansprüchen angegeben. Die dabei erläuterten Merkmale und Vorteile können sowohl einzeln, als auch in Kombination miteinander eingesetzt werden bzw. wirken. Soweit im Folgenden auf die vorteilhaften Ausgestaltungen des Verfahrens eingegangen wird, gilt dies sinngemäß auch für die Virtualierungssteuerung.

Eine Rückkehr zur hochperformanten Betriebsweise, bei der eine der virtuellen Maschinen direkt und exklusiv die Ressource nutzt, ist möglich, indem nach Abschluss des vierten Schrittes in einem fünften Schritt der direkte Zugriff der ersten virtuellen Maschine auf die Ressource wiederhergestellt wird.

Das Verfahren ist besonders vorteilhaft anwendbar, wenn als die Ressource eine Hardware-Ressource verwendet wird, weil Hardware-Ressourcen nicht beliebig oft dupliziert werden können, wogegen Software-Ressourcen (z.B. Dienste) einfacher duplizierbar sind, solange eine Computer-Hardware genügend Basis-Ressourcen (Speicher und Prozessorleistung) aufweist. Die Hardware-Ressource kann vorteilhaft ein Massenspeicher oder ein anderes, nicht von mehreren Instanzen konkurrierend nutzbares Gerät sein.

Während der Kontrolle der Virtualisierungssteuerung über die Ressource werden vorteilhaft die Zugriffe der ersten virtuellen Maschine auf die Ressource mittels des ersten virtuellen Gerätes im Wechsel mit den Zugriffen der zweiten virtuellen Maschine mittels des zweiten virtuellen Gerätes durchgeführt, so dass beide virtuelle Maschinen bzw. die von diesen unterstützten Betriebssysteme die Ressource jeweils nutzen können.

Durch die Virtualisierungssteuerung wird vorteilhaft eine Überwachung des Betriebszustandes der Ressource durchgeführt, wobei der erste Schritt erst dann ausgeführt wird, wenn die Ressource einen dafür geeigneten Betriebszustand aufweist. Dadurch kann erreicht werden, dass eine laufende Nutzung der Ressource ordnungsgemäß zu Ende geführt wird, bevor ein Wechsel der Betriebsweise durchgeführt wird. Analog dazu kann vor einer Rückkehr zur ursprünglichen Betriebsweise ebenso ein geeigneter Betriebszustand abgewartet werden. Als ein geeigneter Betriebszustand wird vorteilhaft ein Leerlauf der Ressource oder ein Abschluss eines Bearbeitungszyklus' abgewartet.

Wenn vor Durchführung des ersten Schrittes Zugriffe der zweiten virtuellen Maschine auf das zweite virtuelle Gerät durch die Virtualisierungssteuerung gepuffert werden, wobei der erste und die nachfolgenden Schritte erst nach Erreichen einer festgelegten Anzahl gepufferter Zugriffe und/oder nach Ablauf einer voreingestellten Wartezeit ausgeführt werden, kann die Anzahl der Wechsel der Betriebsweise verringert werden, womit die bei einem Wechsel auftretenden Verzögerungen minimiert werden können.

Ausführungsbeispiele des erfindungsgemäßen Verfahrens werden nachfolgend anhand der Zeichnungen erläutert; gleichzeitig werden damit Ausführungsbeispiele erfindungsgemäßer Virtualisierungssteuerungen dargelegt.

Dabei zeigen:
- Figur 1: Zustände einer Auftragsverarbeitung einer exemplarischen Ressource,
- Figur 2: einen ersten Betriebszustand, bei der ein Betriebssystem die Ressource mittels direktem Zugriff exklusiv nutzt,
- Figur 3: einen zweiten Betriebszustand mit konkurrierendem Zugriff auf die Ressource durch zwei Betriebssysteme,
- Figur 4: einen Übergang vom ersten zum zweiten Betriebszustand, und
- Figur 5: die Übergänge zwischen den einzelnen Betriebszuständen im Überblick.

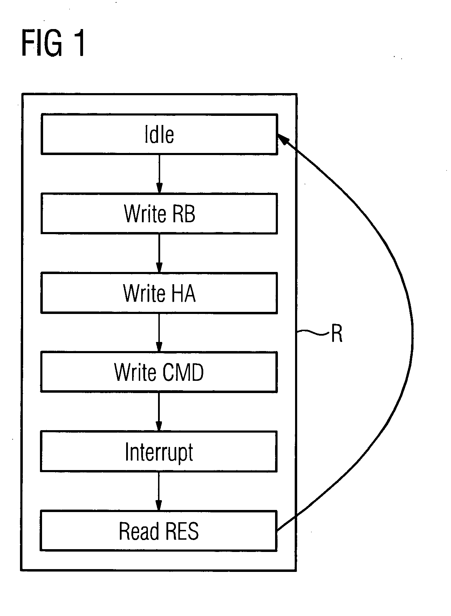

Das im Folgenden beschriebene Verfahren wird anhand einer in der Figur 1 vereinfacht dargestellten Ressource R erläutert, deren Zustände in einem Sequenzdiagramm dargestellt sind. Dabei wird von einem "Leerlauf" Idle ausgegangen, in dem ein Verarbeitungszyklus begonnen werden kann; nach einem letzten Zustand Read_RES (Auslesen eines Resultats aus einem Register oder dgl.) springt der Zustand zurück zum Zustand Idle, was in allen Figuren durch einen entsprechenden Pfeil nach oben visualisiert wird. Es bleibt anzumerken, dass das Zustandsmodell einer echten Ressource R vom dargestellten vereinfachten Beispiel abweichen kann, was aber auf das beschriebene Verfahren keine Auswirkung hat.

Die Ressource R wird durch Schreiben der Blocknummer eines Ressourcenblocks RB und einer physikalischen Hostadresse HA für den Nutzdatenspeicher in die dafür vorgesehenen Register RB und HA parametriert. Die Reihenfolge dieser Parametrierung kann in verschiedenen Beispielen sowohl frei, als auch fest vorgegeben sein, was hier nur dann erwähnt wird, soweit es von Belang ist. Nachdem die Ressource R parametriert ist, wird per Kommando "Read" oder "Write" ins Kommandoregister CMD der Lese- oder Schreibauftrag CMD ausgeführt und anschließend per Interrupt quittiert. Zuletzt kann per Lesen des Ergebnisregisters RES das Ergebnis des Auftrags überprüft werden. Die Register der Ressource R können auf realen Systemen per Memory Mapped I/O, oder per I/O Zugriff gelesen und geschrieben werden. Auch können andere Hardwarekomponenten die Funktion der Ressource R beeinflussen, und müssen daher in einem realen System auch behandelt werden, wie z.B. Interrupt-Controller.

Fehlerzweige in den Ressourcenzuständen werden hier nicht behandelt, da sie nichts an den Grundprinzipien ändern. Wir gehen lediglich davon aus, dass ein ausbleibender Interrupt nach einer definierten Zeit das Fehlschlagen des Auftrags anzeigt, was sich dann auch in RES manifestiert.

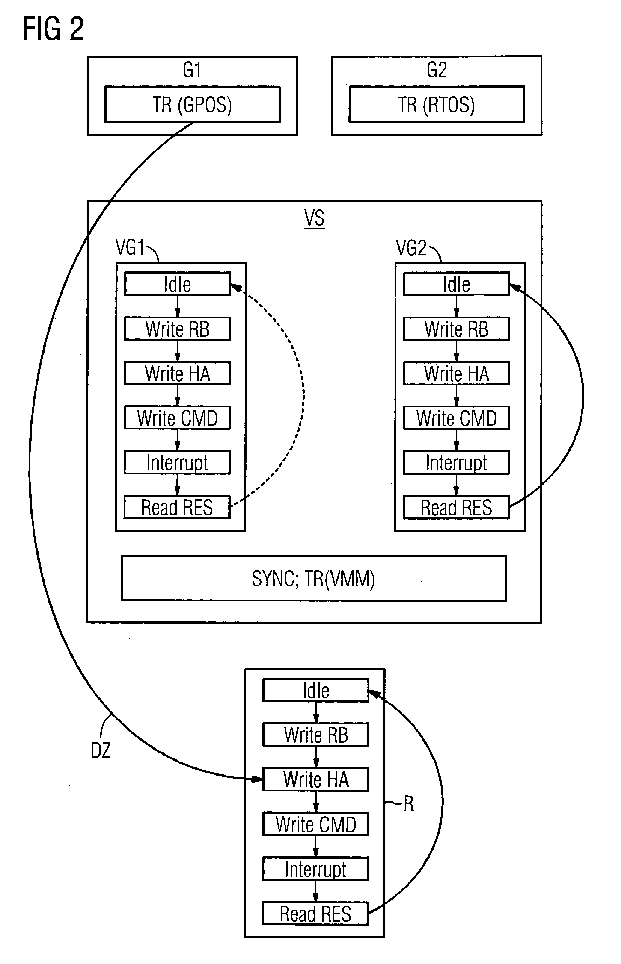

In der Figur 2 ist der Fall dargestellt, dass der Gast G1 exklusiv auf die Ressource R zugreift. Dabei ist für G1 kein virtuelles Gerät VG1 zwischengeschaltet, sondern es erfolgt ein direkter Zugriff DZ; für den Gast G2 verhindert das virtuelle Gerät VG2 direkte Zugriffe auf die Ressource R und wird bei einem Zugriffsversuch die Virtualisierungssteuerung VS veranlassen, die Kontrolle über die Ressource R zu übernehmen. Für den Zeitraum, in dem der Gast G1 direkten Zugriff auf die Ressource R hat, muss das virtuelle Gerät VG2 zwingend aktiviert sein.

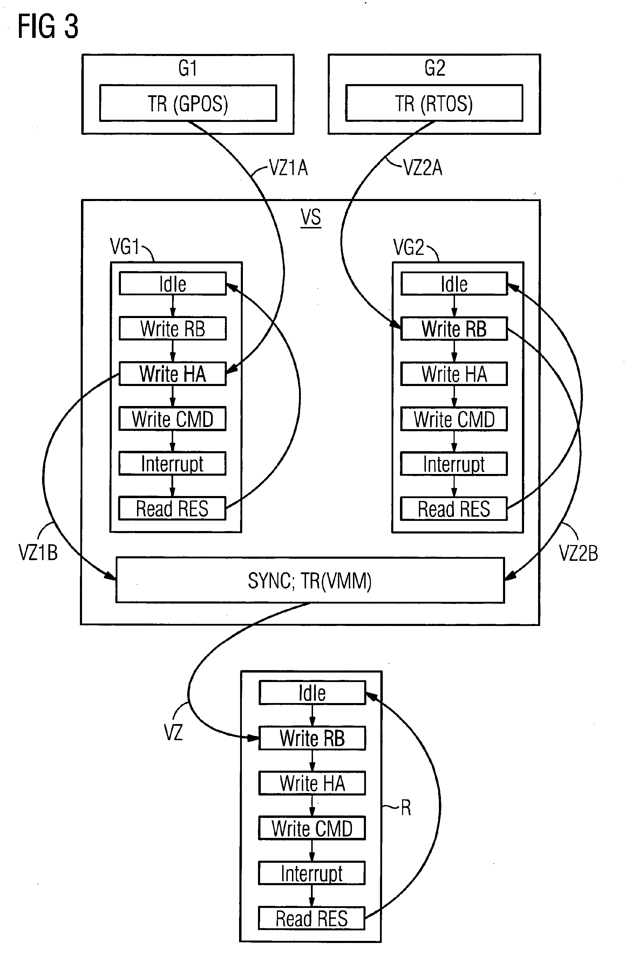

Der Fall des konkurrierenden Zugriffs ist in der Figur 3 illustriert und zeigt die Synchronisation zweier virtueller Maschinen (Gäste G1, G2) beim gemeinsamen Zugriff auf die Ressource R. Diese Figur 3 entspricht dem Stand der Technik für konkurrierende Zugriffe.

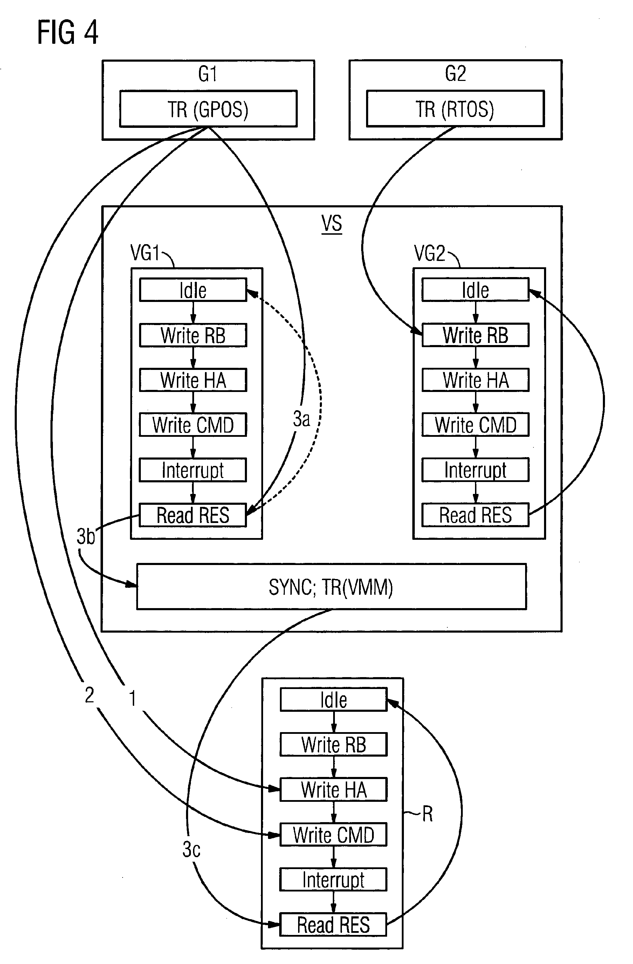

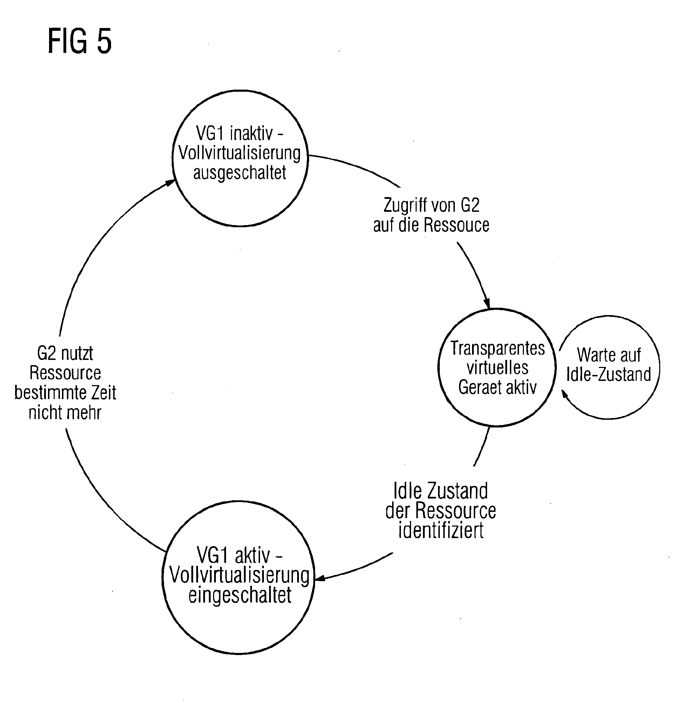

Die Figur 4 schließlich veranschaulicht das Zwischenschalten eines virtuellen Gerätes VG1 nach einem Zugriffsversuch vom Gast G2. Da das virtuelle Gerät VG1 in diesem Betriebszustand transparent ausgeführt ist, wird es im Kontext der Figuren 4 und 5 als transparentes virtuelles Gerät bezeichnet.

Details und unterschiedliche Strategien im Rahmen des Verfahrens werden in den folgenden Abschnitten diskutiert.

Ein virtuelles Gerät kann im Stand der Technik auf verschiedene Weise realisiert werden. Zum einen ist die Vollvirtualisierung des Geräts möglich. Hierbei kann der Hypervisor komplette Aufträge identifizieren und anschließend unter eigener Kontrolle ausführen. Mit dieser Methode können verschiedene Gäste parallel auf ihre virtuellen Geräte für R zugreifen, und der Hypervisor kann die identifizierten Aufträge nach eigenem Ermessen verwalten. Zum Anderen kann auch eine Teilvirtualisierung verwendet werden. Hier werden nur einzelne Register der Ressource R überwacht, und demjenigen Gast Zugriff ermöglicht, der gerade eine Zugriffssequenz bearbeitet. Hierbei kann der Hypervisor (Virtualisierungssteuerung VS) lediglich das Zugriffsrecht der Gäste auf die Ressource R verwalten. Die Vollvirtualisierung hat wegen der größeren Anzahl von überwachten Registern, Memory- oder I/O-Bereichen Performancenachteile gegenüber der teil-virtualisierten Lösung, ist aber flexibler und bereitet keine Probleme bei der Identifikation und Überwachung der Zugriffssequenzen.

Für Betriebssysteme, die ihres Ablaufs in einer virtuellen Maschine gewahr sind, kann ein Treiber installiert werden, welcher durch Paravirtualisierung den Zugriff auf die Ressource R vorteilhaft in den Hypervisor oder eine separate virtuelle Maschine ("Service-VM") verlagert, so dass damit der Zugriff des Gastbetriebssystems auf die Hardware nicht mehr überwacht werden muss und damit verbundene Performancenachteile vermieden werden. Dies wird hier jedoch nicht weiter ausgeführt.

Im Folgenden soll als ein Ausgangspunkt des Verfahrens anhand der Figur 2 die exklusive Nutzung der Ressource R durch ein erstes virtualisiertes Betriebssystem GPOS, installiert auf einer ersten virtuellen Maschine G1 (Gast), erläutert werden. Gegeben sei dazu exemplarisch ein System (Hardware-Plattform, z.B. Personal-Computer) mit einer Virtualisierungssteuerung VS (Virtual Machine Manager VMM) und zwei "Gästen", den virtuellen Maschinen G1 und G2. G1 sei ein allgemeines Betriebssystem GPOS (General-Purpose Operating System), z.B. Microsoft Windows 7, zur Visualisierung und Datenhaltung und G2 sei ein Echtzeitbetriebsystem RTOS (Real Time Operating System) mit zeitkritischen Steuerungs- und Verwaltungsaufgaben, z.B. der Signalverarbeitung und/oder der Echtzeitkommunikation. G2 kann aber alternativ auch ein zweites allgemeines Betriebssystem sein. Jedes der Gast-Betriebssysteme weist spezifische Treiber TR(GPOS), TR(RTOS) zum Betrieb der Ressource R auf.

Die gemeinsam zu nutzende Ressource R sei hier beispielsweise eine Festplatte, die G1 als System- und Datenplatte dient, welche in hoher Frequenz benutzt wird. G2 benutze die Platte im Fall zu gelegentlichem Speichern der Prozeßdaten und zu gelegentlichem Laden von Rezepturdaten oder von anderen Daten, die meist permanent im Hauptspeicher liegen, und greift daher selten auf die Festplatte zu.

Wie man an diesem Beispiel sieht, bedingt im Stand der Technik die gelegentliche Nutzung der Ressource R durch G2 die Notwendigkeit virtualisierter Zugriffe auch von G1, welches dadurch in der Performance beeinträchtigt wird. Das vorliegende Verfahren zeigt Wege, wie in einer Virtualisierungssteuerung VS bei stark asymmetrischer Benutzung einer gemeinsamen Ressource R durch mehrere Gäste G1, G2 die Performance für denjenigen Gast G1 optimiert werden kann, der der hauptsächliche Nutzer der Ressource R ist.

Wie in den Figuren 2 bis 5 dargestellt, etabliert die Virtualisierungssteuerung VS virtuelle Geräte VG1, VG2 für die Ressource R. Unter einem virtuellen Gerät VG1, VG2 allgemein verstehen wir dabei eine virtualisierende Zwischenschicht als Teil der Virtualisierungssteuerung VG, die Hardwarezugriffe der Gastsysteme G1, G2 auf die Ressource R abfängt, synchronisiert, ggf. geeignet modifiziert und schließlich der Ressource R weitergibt. Hierbei benutzt man vom Prozessor bereitgestellte Virtualisierungstechnologien, die I/O- und Memory-Bereiche überwachen können, und bei entsprechendem Zugriff die Kontrolle vom Gast zur Virtualisierungssteuerung VS übertragen. Ebenso werden Interruptquellen auf dem Interruptcontroller so parametriert, dass der Interrupt von R von der Virtualisierungssteuerung VS abgefangen und dem richtigen Gast G1, G2 weitergegeben werden.

Als Spezialfall hierzu gibt ein "transparentes" virtuelles Gerät die abgefangenen Zugriffe auf Register der Ressource R und/oder Reaktionen der Ressource R wie z.B. Interrupts unverändert weiter und kann darüber hinaus zur Erkennung des Zustandes der Ressource R beliebig Register der Ressource R lesen, solange dies die Funktion der Ressource R nicht beeinträchtigt; in der Figur 4 ist dazu das virtuelle Gerät VG1 als transparentes virtuelles Gerät ausgestaltet. Es dient ausschließlich dazu, der Virtualisierungssteuerung VS Informationen über die laufenden Zugriffe zu verschaffen. Dies kann z.B. dazu dienen, einen geeigneten Punkt zur Unterbrechung des Zugriffs durch den Gast G1 zu identifizieren, oder auch zur Sammlung statistischer Daten bzgl. der Zugriffshäufigkeit. Ein Gast G1, der eine von einem transparenten virtuellen Gerät kontrollierte Ressource R benutzt, verhält sich wie "nicht-virtualisiert", hat daher exklusiven Zugang zu der Ressource R, jedoch durch Interaktion mit einer Virtualisierungssteuerung VS mit leicht verminderter Performance.

Es sei in folgendem G1 derjenige Gast, der die gemeinsam benötigte Ressource R hochfrequent verwendet, G2 verwende die Ressource R nur sporadisch. Der grundlegende Zustand des beschriebenen Verfahrens wie in der Figur 1 dargestellt liegt nun darin, G1 im Normalfall nicht-virtualisierte Zugriffe (Direkter Zugriff DZ) auf R zu ermöglichen. Damit kann G1 die Ressource R im Normalfall ohne Performancenachteile nutzen. G2 ist in dieser Betriebsart ein direkter Zugriff auf die Ressource R überhaupt nicht möglich. Jeder Gast G1, G2 hat wie erwähnt eigene Treiber TR(GPOS), TR(RTOS) zum Zugriff auf die Ressource R, wobei aber in diesem Betriebszustand der Treiber TR(RTOS) nicht zum Einsatz kommt bzw. nicht zum direkten Zugriff DZ auf die Ressource R nutzbar ist. Erst bei einem Nutzungs-Versuch der Ressource R durch den Gast G2 wird der Treiber TR(RTOS) erstmalig verwendet. Sobald der Hypervisor von G2 einen Zugriffswunsch auf R registriert, wird der nicht virtualisierte Zugriff von G1 durch Zwischenschaltung eines virtuellen Geräts auf virtualisierten Zugriff umgestellt.

Dieser Zustand ist in der Figur 3 dargestellt. Hier greifen nun beide Gäste G1, G2 gleichberechtigt mittels Zugriffen VZ1A, VZ2A auf die zwischengeschalteten virtuellen Geräte VG1, VG2 auf die Ressource R zu, wobei die Virtualisierungssteuerung VS die von den virtuellen Geräten VG1, VG2 erzeugten Zugriffe VZ1B, VZ2B mittels einer Zwischenschicht SYNC; TR(VMM) (Synchronisierung und Treiber für die Ressource R in der Virtualisierungssteuerung) synchronisiert; es ergibt sich eine Abfolge von Zugriffen VZ. Die Zwischenschicht SYNC; TR(VMM) kann dabei die Zugriffe VZ1B, VZ2B beispielsweise abwechselnd verarbeiten oder nach anderen Strategien kanalisieren, beispielsweise nach einem Prioritäts- oder Zeitscheibenverfahren.

Der Übergang von dem Zustand einer exklusiven Nutzung (Direkter Zugriff DZ) gemäß der Figur 2 zu einem konkurrierenden Zugriff gemäß der Figur 3 wird nachfolgend anhand der Figur 4 erläutert. Die Abfolge und das Zusammenwirken der Zustände ist in der Figur 5 dargestellt.

Wie bereits oben erwähnt, handelt es sich bei dem virtuellen Gerät VG1 zunächst um ein "transparentes" virtuelles Gerät. Der Hypervisor (Virtualisierungssteuerung VS) ist also zunächst noch nicht in der Lage, die Ressource R vollständig zu kontrollieren, da nicht bekannt ist, ob die Ressource R gerade in Benutzung ist. Zugriffe des Gastes G1 geschehen direkt, siehe Pfeile 1 und 2 der Figur 4. Mittels des zwischengeschalteten transparenten virtuellen Geräts kann die Virtualisierungssteuerung VS nun den nach wie vor direkten, nichtvirtualisierten Zugriff von G1 auf R überwachen, und feststellen, in welchem Teil der Zugriffssequenz (siehe Figur 1) der Zugriff des Gastes G1 auf die Ressource R sich gerade befindet. Dabei muss hier zumindest der Idle-Zustand der Ressource R eindeutig identifiziert werden können, was hier durch Überwachung der Zugriffe auf das Register RES (Result) geschehen kann (Pfeile 3a, 3b, 3c) oder aber auch beispielsweise durch eine Überwachung des Interrupts.

Dabei sind zwei Fälle zu unterscheiden. Zum einen ist es möglich, dass der Gast G1 aktuell keine Zugriffe durchführt. Die Ressource R befindet sich damit schon im gewünschten Zustand Idle. Nun gilt es zu unterscheiden, ob die Virtualisierungssteuerung VS aufgrund der Gegebenheiten von R in der Lage ist, diesen Idle-Zustand sicher zu identifizieren. Ist dies der Fall, so ist der gewünschte Zustand bereits erreicht. Wenn nicht, so muss die Virtualisierungssteuerung VS mindestens den von der Ressource R vorgegebenen Timeout abwarten, bevor die Virtualisierungssteuerung VS sicher sein kann, dass kein Auftrag aktuell in Bearbeitung ist.

Im zweiten Fall hingegen kann unabhängig von der allgemeinen Identifizierbarkeit des Idle-Zustands anhand der Zugriffe auf Register der Ressource R die durchlaufene Zugriffssequenz identifiziert werden. Damit kann die Virtualisierungssteuerung VS den Zeitpunkt ermitteln, zu welchem sich die Ressource R im Zustand Idle befindet.

Sobald die Virtualisierungssteuerung VS den Idle-Zustand der Ressource R identifiziert hat, wird ein virtuelles Gerät VG1 zum vollvirtualisierten Zugriff auf die Ressource R für den Gast G1 zwischengeschaltet (siehe Figur 3). Die Ressource R wird ab dieser Stelle mit Methoden nach dem Stand der Technik zwischen G1 und G2 geteilt (voll-virtualisierter Betrieb). Es wird darauf hingewiesen, dass die hierfür verwendeten virtuelle Geräte VG1, VG2 auch über das einfache Überwachen von I/O und Memory-Adressen sowie Interrupts hinausgehende Mechanismen verwenden können.

Nachdem der Gast G2 seine Zugriffe (siehe Zugriff VZ2B in Figur 3) durchgeführt hat, kann an einer Stelle, an der sich die Ressource R im Idle-Zustand befindet, das virtuelle Gerät VG1 abgeschaltet und dem Gast G1 wieder der nicht-virtualisierte, direkte Zugriff DZ (siehe Figur 2) bzw. der im Rahmen der Figur 4 beschriebene überwachte, nicht-virtualisierte auf die Ressource R ermöglicht werden.

Eine Performancesteigerung im transparenten virtuellen Gerät VG1 (Figur 4) ist möglich, sofern der Idle-Zustand der Ressource R ohne eine komplette Überwachung der Zugriffssequenz feststellbar ist. Dann können die durch die Virtualisierungssteuerung VS überwachten Register der Ressource R in ihrem Umfang minimiert werden, indem nur das für die Identifikation des Idle-Zustands notwendige überwacht wird. In vorliegendem Beispiel kann man sich beispielsweise auf eine Überwachung des Interrupts und des anschließenden Lesen des Status im Register RES beschränken.

Eine weitere Performancesteigerung kann durch Auftragspufferung erfolgen. Dazu kann die Virtualisierungssteuerung VS die nur gelegentlich auftretenden Zugriffe VZ2A des Gastes G2 Zwischenpuffern und erst in der Folge selbständig weiterverarbeiten. Hierbei sind verschiedene Strategien möglich, insbesondere das Ansammeln mehrerer Aufträge, welche erst nach Erreichen einer bestimmten Anzahl oder nach Ablauf einer bestimmten Zeit mittels des beschriebenen Verfahrens auf der Ressource R ausgeführt werden. Dieses Vorgehen ist insbesondere dann von Vorteil, wenn man G1 während einer zeitkritischen Transaktion nicht unterbrechen darf oder will und gleichzeitig G2 nicht auf die Fertigstellung seines Auftrages warten soll. G1 kann eine solche Transaktion durch sog. "Locking-Mechanismen" auf der Ressource R markieren, welche beispielsweise durch ein zur Virtualisierungssteuerung VS geschicktes Kommando, z.B. Hypercall/Hypervisor Call/VM-EXIT, realisiert werden kann.

Der oben beschriebene "Timeout-Mechanismus" zur Festellung des Idle-Zustands kann in einer vorteilhaften Ausgestaltung vermieden werden. Wie beschrieben, kann in dem Fall, in dem der Idle-Zustand der Ressource R nicht ohne eine komplette Überwachung der Zugriffssequenz feststellbar ist, auf Seiten des Gasts G1 ein "Timeout" abgewartet werden, um die Bearbeitung eines Auftrages sicher auszuschließen. Dieser Timeout kann dadurch vermieden werden, dass bei fehlender Aktivität durch G1 auf der Ressource R der Gast G1 Dummyaufträge auf R absetzt, welche für den Ablauf von G1 nicht notwendig sind, jedoch es dem Hypervisor (Virtualisierungssteuerung VS) erlauben, einen Idle-Zustand der Ressource R schneller zu erkennen, als dies per Timeout-Mechanismus möglich wäre. Diese Aufträge sollten idealerweise Leseaufträge sein und in einer höheren Frequenz als dem Timeoutwert abgesetzt werden. Gleichzeitig sollten sie auf G1 niederprior sein, um die Ausführung von G1 nicht unnötig zu behindern. Die hier beschriebenen Dummyaufträge können auf G1 sowohl als Treiber wie auch als Applikation realisiert werden.

Durch Verwendung virtueller Geräte VG1, VG2 ist es der Virtualisierungssteuerung VS, neben der Koordination der Zugriffe selbst, möglich, Statistiken über die Benutzung einer Ressource R durch die einzelnen Gäste G1, G2 zu erstellen. Bei nicht-konkurrierendem Zugriff auf R (siehe Figur 2) kann hierfür auch ein transparentes virtuelles Gerät benutzt werden (siehe Erläuterung zu Figur 4). Diese Statistikdaten können dazu verwendet werden, die Zuordnung von Gastsystemen zu Zugriffsfrequenz vorteilhaft vorzunehmen. Damit können im vorgestellten Verfahren die Rollen des häufig und der sporadisch auf die Ressource R zugreifenden Gäste dynamisch geändert werden, was das Verfahren bei zeitweilig erhöhten Zugriffsraten auf einem Gast verbessert. Bei dynamisch auftretender erhöhter Zugriffsfrequenz von mehreren Gästen kann das Verfahren vorteilhaft zugunsten des Einsatzes virtueller Geräte auf allen Gästen ausgesetzt werden.

Als Beispiel sei hier die zyklische Auswertung über einen längeren Zeitraum gesammelter Daten durch einen Gast genannt, die täglich zu einem bestimmten Zeitpunkt auftritt. Der Hypervisor kann anhand seiner Zugriffsstatistik voraussehen, daß zu diesem Zeitpunkt der entsprechende Gast eine erhöhte Zugriffsfrequenz auf die Ressource R haben wird, und ihm entsprechend die Ressource R bevorzugt zuteilen.

Im Gegensatz zu dem zuvor beschriebenem Ansatz, eine erhöhte Zugriffsfrequenz durch die Virtualisierungssteuerung VS via Auswertung statistischer Zugriffsdaten selbst erkennen bzw. prognostizieren zu lassen, kann ein Gast der Virtualisierungssteuerung VS auch selbst seine Zugriffsfrequenz auf die Ressource R mittels einer Kommunikationsmethode wie z.B. Hypercall mitteilen. Auf diese Weise wird beispielsweise der Gast G2 vor Zugriff auf seine Datenhaltung die Virtualisierungssteuerung VS von der nun folgenden großen Mengen von Zugriffen informieren, damit diese die Strategie hierauf ausrichten kann, also entweder G1 und G2 als Gäste mit ähnlicher Zugriffsfrequenz auf R behandeln, oder sogar G1 nunmehr als Gast mit niedriger Zugriffsfrequenz und somit G2 als Maschine mit bevorzugt direktem Zugriff auf die Ressource R versehen. Nachdem der Zugriff auf die Datenhaltung beendet ist, wird die Virtualisierungssteuerung VS wiederum z.B. per Hypercall von der nunmehr wieder verringerten Zugriffsfrequenz informiert. Diese Methode kann mit der oben beschriebenen statistischen Methode kombiniert werden, indem die Ankündigung einer bestimmten Zugriffsfrequenz mit den aus der Statistik gewonnenen Werten bewertet wird, und entsprechende Anpassungen der Virtualisierungsstrategie von R vorgenommen werden.

## Patentansprüche

1. Verfahren zur Nutzung einer Ressource (R) eines Computers durch zumindest zwei virtuelle Maschinen (G1, G2),
wobei ein wechselweiser Zugriff auf die Ressource (R) durch die auf den virtuellen Maschinen (G1, G2) jeweils installierten Betriebssysteme vorgesehen ist,
wobei eine Virtualisierungssteuerung (VS) zur Virtualisierung der Ressource (R) eingerichtet ist, und
wobei in der Virtualisierungssteuerung (VS) die Ressource (R) für jede der virtuellen Maschinen (G1, G2) als ein erstes bzw. als ein zweites virtuelles Gerät (VG1, VG2) bereitgestellt wird,
**dadurch gekennzeichnet, dass**
für einen alleinigen Zugriff auf die Ressource (R) durch eine erste der virtuellen Maschinen (G1) ein direkter Zugriff (DZ) eines ersten Betriebssystems der ersten virtuellen Maschine (G1) auf die Ressource (R) vorgesehen ist,
wobei der zweiten virtuellen Maschine (G2) für Zugriffe auf die Ressource (R) das zweite virtuelle Gerät (VG2) zugeordnet ist, und
dass im Falle einer Zugriffsanforderung der zweiten virtuellen Maschine (G2) auf die Ressource (R)
- in einem ersten Schritt der direkte Zugriff (DZ) der ersten virtuellen Maschine (G1) auf die Ressource (R) beendet wird,
- in einem zweiten Schritt die Kontrolle der Ressource (R) von der Virtualisierungssteuerung (VS) vollständig übernommen wird,
- in einem dritten Schritt der ersten virtuellen Maschine (G1) für weitere Zugriffe auf die Ressource (R) das erste virtuelle Gerät (VG1) zugeordnet wird, und
- in einem vierten Schritt der Zugriff der zweiten virtuellen Maschine (G2) auf die Ressource (R) mittels des zweiten virtuellen Gerätes (VG2) durchgeführt wird.

2. Verfahren nach Patentanspruch 1,
**dadurch gekennzeichnet,**
**dass** nach Abschluss des vierten Schrittes in einem fünften Schritt der direkte Zugriff (DZ) der ersten virtuellen Maschine (G1) auf die Ressource (R) wiederhergestellt wird.

3. Verfahren nach einem der vorhergehenden Patentansprüche, **dadurch gekennzeichnet,**
**dass** als die Ressource (R) eine Hardware-Ressource verwendet wird.

4. Verfahren nach Patentanspruch 3,
**dadurch gekennzeichnet,**
**dass** als die Hardware-Ressource ein Massenspeicher oder ein anderes temporär nur von einer Instanz nutzbares Gerät verwendet wird.

5. Verfahren nach einem der vorhergehenden Patentansprüche,
**dadurch gekennzeichnet,**
**dass** während der Kontrolle der Virtualisierungssteuerung (VS) über die Ressource (R) die Zugriffe der ersten virtuellen Maschine (G1) auf die Ressource (R) mittels des ersten virtuellen Gerätes (VG1) im Wechsel mit den Zugriffen der zweiten virtuellen Maschine (G2) mittels des zweiten virtuellen Gerätes (VG2) durchgeführt werden.

6. Verfahren nach einem der vorhergehenden Patentansprüche, **dadurch gekennzeichnet,**
**dass** durch die Virtualisierungssteuerung (VS) eine Überwachung des Betriebszustandes der Ressource (R )durchgeführt wird, wobei der erste Schritt erst dann ausgeführt wird, wenn die Ressource (R) einen dafür geeigneten Betriebszustand aufweist.

7. Verfahren nach Patentanspruch 6,
**dadurch gekennzeichnet,**
**dass** als ein geeigneter Betriebszustand ein Leerlauf der Ressource (R) oder ein Abschluss eines Bearbeitungszyklus' derselben abgewartet wird.

8. Verfahren nach einem der vorhergehenden Patentansprüche,
**dadurch gekennzeichnet,**
**dass** vor Durchführung des ersten Schrittes Zugriffe der zweiten virtuellen Maschine (G2) auf das zweite virtuelle Gerät (VG2) durch die Virtualisierungssteuerung (VS) gepuffert werden, wobei der erste und die nachfolgenden Schritte erst nach Erreichen einer festgelegten Anzahl gepufferter Zugriffe und/oder nach Ablauf einer voreingestellten Wartezeit ausgeführt werden.

9. Virtualisierungssteuerung (VS) zur Verwaltung einer Ressource (R) eines Computers mit zumindest zwei virtuellen Maschinen (G1, G2) und zur Verwaltung der Zugriffe der zumindest zwei virtuellen Maschinen (G1, G2) auf die Ressource, wobei die Virtualisierungssteuerung (VS) zur Bereitstellung von einem ersten virtuellen Gerät (VG1) für Zugriffe der ersten virtuellen Maschine (G1) auf die Ressource (R) und zur Bereitstellung eines zweiten virtuellen Gerätes (VG2) für Zugriffe der zweiten virtuellen Maschine (G2) auf die Ressource (R) eingerichtet ist,
**dadurch gekennzeichnet,**
**dass** die Virtualisierungssteuerung (VS) dazu eingerichtet ist, dass für einen alleinigen Zugriff auf die Ressource (R) durch eine erste der virtuellen Maschinen (G1) ein direkter Zugriff (DZ) des Betriebssystems der ersten virtuellen Maschine auf die Ressource (R) konfiguriert wird,
wobei der zweiten virtuellen Maschine (G2) mit dem zweiten Betriebssystem für Zugriffe auf die Ressource (R) das zweite virtuelle Gerät (VG2) zugeordnet ist, und
**dass** im Falle einer Zugriffsanforderung der zweiten virtuellen Maschine (G2) mit dem zweiten Betriebssystem auf die Ressource (R)
- in einem ersten Schritt der direkte Zugriff (DZ) der ersten virtuellen Maschine (G1) auf die Ressource (R) beendet wird,
- in einem zweiten Schritt die Kontrolle der Ressource (R) von der Virtualisierungssteuerung (VS) vollständig übernommen wird,
- in einem dritten Schritt der ersten virtuellen Maschine (G1) für weitere Zugriffe auf die Ressource (R) das erste virtuelle Gerät (VG1) zugeordnet wird, und
- in einem vierten Schritt der Zugriff der zweiten virtuellen Maschine (G2) auf die Ressource (R) mittels des zweiten virtuellen Gerätes (VG2) durchgeführt wird.

10. Virtualisierungssteuerung (VS) nach Patentanspruch 9,
**dadurch gekennzeichnet,**
**dass** die Virtualisierungssteuerung (VS) dazu eingerichtet ist, nach Abschluss des vierten Schrittes in einem fünften Schritt den direkten Zugriff (DZ) der ersten virtuellen Maschine (G1) auf die Ressource (R) wiederherzustellen.

11. Virtualisierungssteuerung (VS) nach einem der Patentansprüche 9 oder 10,
**dadurch gekennzeichnet,**
**dass** die Virtualisierungssteuerung (VS) zur Verwendung einer Hardware-Ressource als die Ressource (R) eingerichtet ist.

12. Virtualisierungssteuerung (VS) nach Patentanspruch 11,
**dadurch gekennzeichnet,**
**dass** durch die Virtualisierungssteuerung (VS) zur Verwendung eines Massenspeichers oder eines anderen temporär nur von einer Instanz nutzbaren Gerätes als die Hardware-Ressource eingerichtet ist.

13. Virtualisierungssteuerung (VS) nach einem der Patentansprüche 9 bis 12,
**dadurch gekennzeichnet,**
**dass** während der Kontrolle der Virtualisierungssteuerung (VS) über die Ressource (R) die Zugriffe der ersten virtuellen Maschine (G1) auf die Ressource (R) mittels des ersten virtuellen Gerätes (VG1) im Wechsel mit den Zugriffen der zweiten virtuellen Maschine (G2) mittels des zweiten virtuellen Gerätes (VG2) durchgeführt werden.

14. Virtualisierungssteuerung (VS) nach einem der Patentansprüche 9 bis 13,
**dadurch gekennzeichnet,**
**dass** durch die Virtualisierungssteuerung (VS) eine Überwachung des Betriebszustandes der Ressource (R) durchgeführt wird, wobei der erste Schritt erst dann ausgeführt wird, wenn die Ressource (R) einen dafür geeigneten Betriebszustand aufweist.

15. Virtualisierungssteuerung (VS) nach Patentanspruch 14,
**dadurch gekennzeichnet,**
**dass** als ein geeigneter Betriebszustand ein Leerlauf der Ressource (R) oder ein Abschluss eines Bearbeitungszyklus' der Ressource (R) abgewartet wird.

16. Virtualisierungssteuerung (VS) nach einem der Patentansprüche 9 bis 15,
**dadurch gekennzeichnet,**
**dass** vor Durchführung des ersten Schrittes Zugriffe der zweiten virtuellen Maschine (G2) auf das zweite virtuelle Gerät durch die Virtualisierungssteuerung (VS) gepuffert werden, wobei der erste und die nachfolgenden Schritte erst nach Erreichen einer festgelegten Anzahl gepufferter Zugriffe und/oder nach Ablauf einer voreingestellten Wartezeit ausgeführt werden.
